# EUROPEAN PATENT SPECIFICATION

(11) **EP 0 433 247 B1**
(45) Date of publication and mention of the grant of the patent: **19.07.1995**
(21) Application number: 90830538.6
(22) Date of filing: 20.11.1990
(51) Int. Cl.: H02K 9/14, H02K 5/20, H02K 9/16, H02K 5/15

(54) **Casing construction for electric motors**
Gehäuseaufbau für elektrische Motoren
Construction d'une enveloppe pour moteurs électriques

(30) Priority: 12.12.1989 IT 2222189 U
(43) Date of publication of application: 19.06.1991
(73) Proprietor: OEMER MOTORI ELETTRICI S.p.A., 20027 Rescaldina (Milano) (IT)
(72) Inventor: Landonio, Rino Natale, c/o Oemer Motori Elettrici, I-20027 Rescaldina (Milano) (IT)
(74) Representative: Cicogna, Franco

(56) References cited:
- DE-B- 2 244 275
- DE-C- 3 738 592
- DE-U- 8 900 917

## Description

### BACKGROUND OF THE INVENTION

The present invention relates to a casing construction for electric motors.

As is known, conventional electric motors are usually provided with an enclosing cylindric casing bearing fins thereon, the casing cylindrical body having two open ends to which there are coupled two covers: thus, conventional electric motor casings comprise three main component parts which, because of inevitable tolerances of these parts, involves assembling errors which can excessively increase the electric gap between the stator and rotor members of the motor.

Another drawback of conventional casings is that for accessing a portion of the electric motor, the casing must be fully dismantled.

Yet another drawback is that a very great number of spare casing parts must be held in a store for replacing possible damaged casing parts.

The document DE-C-3738592 discloses a casing construction for electric motors having substantially the features of the preamble of the main claim.

### SUMMARY OF THE INVENTION

Accordingly, the aim of the present invention is to overcome the above mentioned drawbacks by providing an outer casing construction for electric motors which comprises a small number of component parts which can be easily and quickly assembled to one another.

Within the scope of the above mentioned aim, a main object of the present invention is to provide such an electric motor casing which allows the electric motor parts to be efficiently cooled and which, moreover, is adapted to provide a very small gap between the rotor portion and stator portion of the motor so as to greatly improve the efficiency of the electric motor.

Yet another object of the present invention is to provide such an electric motor casing to which optional fittings can be quickly and easily applied.

According to one aspect of the present invention, the above mentioned aim and objects, as well as yet other objects, which will become more apparent hereinafter, are achieved by a casing construction for electric motors, according to the characterizing portion of the main claim.

### BRIEF DESCRIPTION OF THE DRAWINGS

Further characteristics and advantages of the present invention will become more apparent hereinafter from the following detailed description of a preferred embodiment thereof, which is illustrated, by way of an indicative but not limitative example, in the figures of the accompanying drawings where:

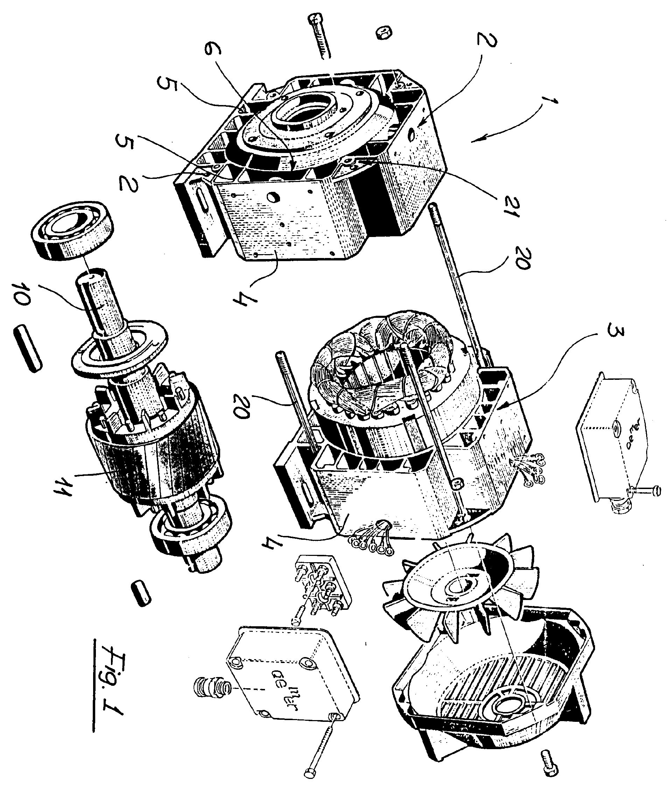

Figure 1 is a schematic perspective view showing an electric motor provided with an outer casing according to the present invention, and

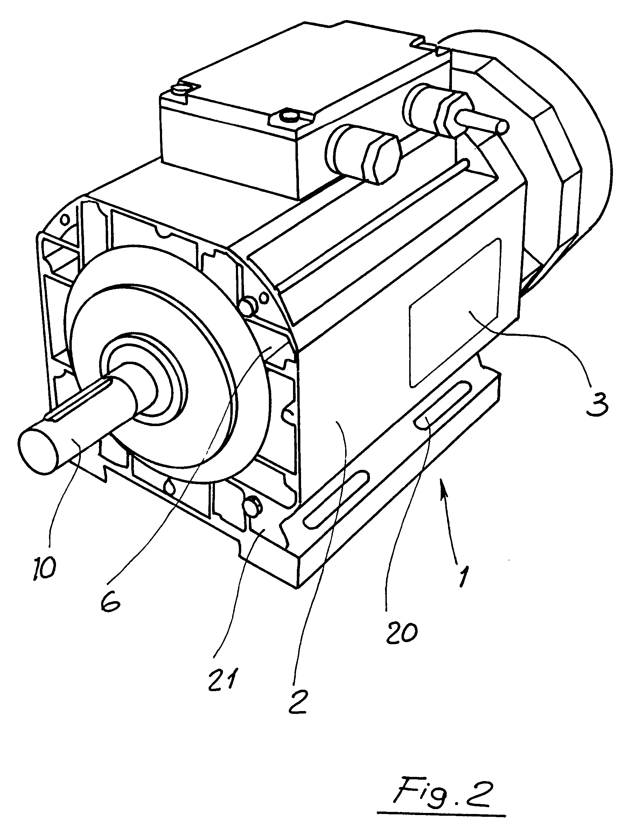

Figure 2 shows the electric motor in a fully assembled condition.

### DESCRIPTION OF THE PREFERRED EMBODIMENT

With reference to the figures of the accompanying drawings, the casing construction for electric motors according to the invention, which has been overally indicated at the reference number 1, comprises a first half-shell 2 and a second half-shell 3, which are identical to one another and advantageously made of an aluminium die-cast body.

Each half-shell 2 and 3 is provided with an outer skirt 4 of substantially quadrangular shape which, through inner fin members 5, supports an inner circular envelope 6 so as to define a plurality of cooling air conveying channels.

Inside the mentioned cylindrical envelope 6 there is formed, by suitable machining operations, the housing of the stator portion of the electric motor whereas on the bottom arranged at the axial end portion of each half-shell, there is machined a recess provided for housing a bearing for supporting the shaft 10 of the rotor portion, indicated at 11.

Thus, by the disclosed machining method, it is possible to make a casing by simply coupling two like construction half-shells, which perfectly fit to one another and are coupled by tie-rods 20 engaging with ears 21 provided at the corner regions of the quadrangular shape skirt 4.

With the disclosed half-shells, the electric motor can be restrained at a plurality of different positions, by foot members, brackets, foot members and brackets, thereby also allowing the assembling of special brackets since the latter can be simply restrained by four screws.

The thus constructed box-like casing affords the possibility of easily making asynchronous three-phase and single-phase standardized electric motors, three-phase torque motors, and all a broad range of other electric motors.

The disclosed casing has a great mechanical strength owing to the provision of the half shells which, due to the outer skirt and fin members, provide a ribbed construction and a very rigid casing body.

Moreover, the possibility of performing very accurate machining operations reduces to a minimum the gap between the rotor portion and stator portion of the motors thereby providing an improved efficiency of the motor as well as allowing the motor to be easily and quickly assembled.

The disclosed construction, in which ventilating air channels are easily formed, provides a quick and efficient cooling of the inner portion of the motor with a very reduced temperature of the outer casing.

The cooling effect can be improved, as is known, by a fan keyed on the shaft of the motor, the air being conveyed by said fan through the channels for the overall length of the casing thereby further improving the motor efficiency.

In this connection it should be also added that it will be also possible to provide the application of servofans, either of an axial or of a radial type, in order to provide constant air flow rates independently from the turning speed of the motor and, moreover, it will be also possible to apply to the motor a braking assembly without the need of performing additional machining operations.

From the above disclosure it should be apparent that the subject casing fully achieves the intended aim and objects.

While the invention has been disclosed and illustrated with reference to a preferred embodiment thereof, it should be apparent that the disclosed embodiment is susceptible to several modifications and variations all of which will come within the scope of the appended claims.

## Claims

1. A casing construction (1) for electric motors, comprising a first and second half-shells (2,3) each of which is provided with an outer skirt (4) with a bottom at one axial portion thereof and being coupled to an inner circular envelope (6) which defines a housing for holding a stator portion of said electric motor, said half-shells (2, 3) being adapted to be coupled by tie-rods (20) so as to rotatably support a shaft member (10) of a rotor portion (11) of said electric motor, characterized in that said half-shells (2,3) have an identical construction, and that each said half-shell (2,3) is provided with a plurality of stiffening fin members (5) coupling said outer skirt (5) to said inner circular envelope (6) and extending through the overall length of each said half-shells, said fins being so designed and arranged that, as said half-shells are coupled to one another, said fins define a plurality of inner cooling air conveying parallel channels extending substantially through the overall length of said electric motor, and in that said outer skirts (4) directly define, as said half-shells (2,3) are coupled, the outer mantle of said casing construction.

2. A casing according to Claim 1, characterized in that said skirt (4) has a substantially quadrangular shape.

3. A casing according to the preceding claims, characterized in that said casing further comprises, at corner regions of said outer skirt (4), ear members (21) for engaging with said tie-rods (20).

4. A casing according to one or more of the preceding claims, characterized in that said casing further comprises means for coupling to said casing outer optional fitting elements.

5. A casing according to one or more of the preceding claims, characterized in that said half-shells (2,3) are made by die-casting an aluminium material, mechanically machining in said casing a housing for receiving the electric motor stator portion and mechanically machining recess portions for housing the bearings of the shaft (10) of the electric motor rotor portion (11).

## Patentansprüche

1. Ein Gehäuseaufbau (1) für Elektromotoren, umfassend eine erste und eine zweite Halbschale (2, 3), wovon jede mit einem äußeren Mantel (14) mit einem Boden an einem axialen Ende davon ausgestattet ist und mit einer inneren kreisförmigen Umhüllung (6) verbunden ist, die ein Gehäuse zum Halten eines Statorteils dieses elektrischen Motors definiert, wobei diese Halbschalen (2, 3) angepaßt sind, durch Zugstangen (20) verbunden zu werden, um so ein Schaftteil (10) eines Rotorteils (11) dieses Elektromotors drehbar zu tragen, dadurch gekennzeichnet, daß diese Halbschalen (2, 3) von identischer Bauweise sind und daß jede dieser Halbschalen (2, 3) mit einer Vielzahl versteifender Rippenteile (5), die diese äußere Ummantelung (4) mit dieser inneren kreisförmigen Umhüllung (6) verbinden und sich über die gesamte Länge jeder dieser Halbschalen hinweg, erstrecken, bereitgestellt sind, wobei diese Rippen so entworfen und angebracht sind, daß, wenn diese Halbschalen miteinander verbunden sind, diese Rippen eine Vielzahl innerer paralleler Gänge zum Führen von Kühlluft definieren, die sich im wesentlichen durch die Gesamtlänge dieses Elektromotors hindurch erstrecken, und daß diese äußeren Ummantelungen (4), wenn diese Halbschalen (2, 3) verbunden sind, direkt den äußeren Mantel dieses Gehäuseaufbaus definieren.

2. Ein Gehäuse nach Anspruch 1, dadurch gekennzeichnet, daß diese Ummantelung (4) eine im wesentlichen viereckige Form besitzt.

3. Ein Gehäuse nach den vorhergehenden Ansprüchen, dadurch gekennzeichnet, daß dieses Gehäuse weiterhin an Eckpunkten dieser äußeren Ummantelung (4) Öffnungen (21) für die Verbindung mit diesen Zugstangen (20) besitzt.

4. Ein Gehäuse nach einem oder mehreren der vorhergehenden Ansprüche, dadurch gekennzeichnet, daß dieses Gehäuse weiterhin eine Vorrichtung zum Verbinden optionaler Befestigungselemente mit diesem Gehäuse umfaßt.

5. Ein Gehäuse nach einem oder mehreren der vorhergehenden Ansprüche, dadurch gekennzeichnet, daß diese Halbschalen (2, 3) durch Druckgießen eines Aluminiummaterials, durch spanabhebendes Einarbeiten in dieses Gehäuse einer Aufnahme, um den Statorteil eines Elektromotors aufzunehmen, und durch spanabhebendes Einarbeiten von vertieften Stellen zum Aufnehmen der Lager der Welle (10) des Rotorteils (11) des elektrischen Motors hergestellt sind.

## Revendications

1. Une construction à boîte (1) pour moteurs électriques, comprenant une première et une seconde demi-coque (2, 3), dont chacune est dotée d'un revêtement extérieur (4) avec un fond à l'une des ses parties axiales et étant couplée à une enveloppe circulaire interne (6) définissant un boîtier pour accueillir une partie stator dudit moteur électrique, lesdites demi-coques (2, 3) étant adaptées à être couplées moyennant des tirants (20) de manière à soutenir rotativement un arbre (10) d'une partie rotor (11) dudit moteur électrique, caractérisée en ce que lesdites demi-coques (2, 3) ont des constructions identiques et que chacune desdites demi-coques (2, 3) est pourvue d'une multiplicité d'ailettes de raidissement (5) couplant ledit revêtement extérieur (4) à ladite enveloppe circulaire interne (6) et s'étendant sur toute la longueur de chacune desdites demi-coques, lesdites ailettes étant conçues et arrangées telles que lesdites ailettes, lors du couplage mutuel desdites demi-coques, définissent une multiplicité de canaux parallèles internes convoyant l'air de refroidissement s'étendant substantiellement sur la longueur entière dudit moteur électrique, et en ce que lesdits revêtements extérieurs (4) définissent directement, lorsque lesdites demi-coques (2, 3) sont reliées entre elles, le revêtement extérieur de ladite construction à boîte.

2. Un boîtier selon la revendication 1, caractérisé en ce que ledit revêtement (4) possède une forme substantiellement quadrangulaire.

3. Un boîtier selon les revendications précédentes, caractérisé en ce que ledit boîtier comprend ultérieurement des perforations (21) dans des parties aux coins dudit revêtement extérieur (4) pour l'enclenchement avec lesdits tirants (20).

4. Un boîtier selon l'une ou plusieurs des revendications précédentes, caractérisé en ce que ledit boîtier comprend ultérieurement un moyen pour coupler audit boîtier des éléments extérieurs de raccordement optionnels.

5. Un boîtier selon l'une ou plusieurs des revendications précédentes, caractérisé en ce que lesdites demi-coques (2, 3) sont faites par moulage sous pression d'un matérieau aluminium, en façonnant mécaniquement dans ledit boîtier une cavité pour accueillir la partie stator d'un moteur électrique et en façonnant mécaniquement des parties en retraite pour accueillir les coussinets de l'arbre (10) de la partie rotor (11) du moteur électrique.
